# EUROPEAN PATENT APPLICATION

(11) **EP 4 825 538 A1**
(43) Date of publication of application: **21.10.2026**
(21) Application number: 24887241.8
(22) Date of filing: 01.03.2024
(51) Int. Cl.: B25J 9/12

(54) **INDUSTRIAL ROBOT**

(30) Priority: 10.11.2023 CN 202311497254
(71) Applicant: Huang, Weiyuan, Suzhou, Jiangsu 215000 (CN)
(72) Inventor: Huang, Weiyuan, Suzhou, Jiangsu 215000 (CN)
(74) Representative: Münchow, Vera Ute Barbara
(86) International application number: PCT/CN2024/079609
(87) International publication number: WO 2025/097615

(57) **Abstract**

Disclosed in the present invention is an industrial robot, comprising: a rotating base, wherein the rotating base can rotate, a transmission base is arranged on the rotating base, and a first transmission is mounted in the transmission base; a first arm, wherein the first arm can rotate and comprises a first end and a second end, the first end is provided with a first connecting portion and a second connecting portion, the first connecting portion and the second connecting portion are arranged on the two sides of the transmission base and connected to the first transmission, and the first connecting portion and the second connecting portion respond to rotation of the first transmission; and a first driving shaft, wherein the first driving shaft passes through the transmission and is connected to the first transmission, at least one end of the first driving shaft is connected to a motor, and the motor is arranged on the side of the first connecting portion or the second connecting portion distant from the first transmission. According to the present application, the weight distribution is more balanced, motors are coaxially arranged on the two sides of the first transmission, a gap between transmission gears is smaller, the precision is higher, the transmission efficiency is high, the structure is more stable, and the service life is longer.

## Description

### TECHNICAL FIELD

The invention relates to the field of robotics and, in particular, to a multi-axis robot.

### BACKGROUND ART

Industrial robots are increasingly replacing human labour in repetitive and physically demanding handling operations in a growing number of fields. The use of a multi-axis robot in a machining centre, particularly while gripping a heavy object, facilitates machining at different heights, angles and positions. Such applications impose higher requirements on the stability, flexibility and accuracy of the robot.

### DISCLOSURE OF THE INVENTION

To address drawbacks of the prior art, embodiments of the invention provide an industrial robot having a balanced and stable overall structure and transmission structure while retaining a high degree of freedom.

To this end, an industrial robot is provided, comprising:
a rotatable rotating seat, a transmission seat being provided on the rotating seat and a first transmission being installed in the transmission seat;
a rotatable first arm comprising a first end and a second end, the first end being provided with a first connecting portion and a second connecting portion, the first connecting portion and the second connecting portion being arranged on opposite sides of the transmission seat and connected to the first transmission, and the first connecting portion and the second connecting portion being configured to move in response to rotation of the first transmission; and
a first drive shaft extending through and connected to the first transmission, at least one end of the first drive shaft being connected to a motor, and the motor being arranged on a side of the first connecting portion or the second connecting portion facing away from the first transmission.

The first arm is connected to opposite sides of the transmission seat by the first connecting portion and the second connecting portion, respectively, so that the first arm is connected to the rotating seat more firmly and in a more balanced manner. Because the first drive shaft extends through the first transmission, a motor may be connected to either one end or both ends of the first drive shaft as required. When two motors are used, the motors are arranged respectively on the sides of the first connecting portion and the second connecting portion, thereby providing a more balanced weight distribution. Compared with a conventional arrangement in which a plurality of motors are positioned on the same side, the motors of the invention can provide coaxial drive, thereby reducing the clearance between transmission gears and improving transmission efficiency, stability and service life. The overall structure is more robust and its centre of gravity remains balanced and stable during use, while the flexibility and degrees of freedom of the robot are retained.

In a further development, at least a portion between the first end and the second end is formed as an inclined surface which extends obliquely from the first connecting portion toward the second connecting portion.

The inclined surface makes the first end of the first arm thicker and heavier than the second end. Consequently, the centre of gravity of the first arm is closer to the rotating seat, the connection between the first end and the rotating seat is more stable, and the second end facilitates installation of another movable arm requiring a larger range of movement.

In a further development, the robot further comprises a second arm connected to a side of the second end adjacent to the inclined surface.

The second arm of a multi-axis robot generally has a greater movement angle and range than the first arm. Although the first end of the first arm is thicker owing to the inclined surface, movement of the second arm is not impeded and a relatively large movement space remains between the second arm and the inclined surface. Moreover, arranging the second arm on the side of the inclined surface positions the overall centre of gravity of the first arm closer to the first transmission when viewed in a vertical direction. This improves the overall stability of the robot, prevents the load on the gears in the first transmission from being biased to one side, and extends service life.

In a further development, the inclined surface is provided with a reinforcing rib extending from the second end toward the first end. When the second arm is used to grip a heavier object, the reinforcing rib strengthens the portion of the first arm adjacent to the second end. Arranging the reinforcing rib on the inclined surface also positions the centre of gravity of the first arm closer to the transmission.

In a further development, the second arm is connected to the second end by a second transmission. A second drive shaft extends through the second transmission, and one end of the second drive shaft is connected to a motor arranged on one side of the second end. A pull rod is provided between the second arm and the first arm, one end of the pull rod being connected to a side of the second arm remote from the second end and the other end of the pull rod being connected to the reinforcing rib.

When only one motor is required to drive the second arm, the pull rod may be connected between the second arm and the inclined surface to exert a pulling force on the second arm. The inclined surface facilitates installation of the pull rod between the first arm and the second arm.

In a further development, the second arm is connected to the second end by a second transmission. A second drive shaft extends through the second transmission, one end of the second drive shaft is connected to a motor arranged on one side of the second end, and the other end of the second drive shaft is connected to a motor arranged on one side of the second arm.

To increase the drive power of the second arm, motors may be arranged on both sides of the second arm. As in the first arm, the two motors drive a common second drive shaft, thereby providing high coaxiality and reducing errors caused by assembly clearances. Because the two motors provide a greater torque, the pull rod between the first arm and the second arm may be provided or omitted according to the required operating conditions.

In a further development, the second arm overlaps the first end of the first arm when viewed in a vertical projection, so that the weights of the first arm and the second arm are applied more evenly to both sides of the transmission.

In a further development, at least one balance lever is connected between the first arm and the rotating seat, one end of the at least one balance lever being connected to at least one of the first connecting portion and the second connecting portion, and the other end of the at least one balance lever being connected to the rotating seat.

The first arm provides two mounting positions on opposite sides of the first transmission, namely a first mounting portion and a second mounting portion, for mounting the at least one balance lever so that the pulling force exerted by the at least one balance lever is more balanced.

In a further development, the transmission seat and the rotating seat are formed integrally at a position on an axis of symmetry of the rotating seat and adjacent to an edge of the rotating seat, and the first transmission is arranged in a through-hole in the transmission seat.

The integral configuration provides a firm connection between the transmission seat and the rotating seat. Positioning the transmission seat on the axis of symmetry balances the load on the rotating seat, while positioning the transmission seat adjacent to the edge of the rotating seat provides a larger movement space for the first arm.

In a further development, a side of the rotating seat remote from the transmission seat is provided with a projecting portion for connection to the balance lever of the first arm.

Further objects, features and advantages of the invention will become apparent from the following description of embodiments with reference to the accompanying drawings.

### BRIEF DESCRIPTION OF THE DRAWINGS

The accompanying drawings used in the description of the embodiments are briefly described below.
Figure 1 is a perspective view of an embodiment of the invention.
Figure 2 is a schematic view of a drive structure of the first transmission of the invention.
Figure 3 is a front view of an embodiment of the invention.
Figure 4 is a perspective view of an embodiment of the invention from another angle.
Figure 5 is a left-side view corresponding to Figure 3.
Figure 6 is a schematic view of the structure of Embodiment 2 of the invention.
Figure 7 is a top view of the invention.

Reference signs in the drawings are as follows: 1 - base; 2 - rotating seat; 3 - first arm; 4 - second arm; 201 - transmission seat; 221, 222 - locating pins; 311 - first connecting portion; 312 - second connecting portion; 301, 302 - motors; 303 - first transmission; 304 - first drive shaft; 31 - first end; 32 - second end; 33 - inclined surface; 331 - reinforcing rib; 341, 342 - balance levers; 401, 402 - motors; 41 - second transmission; and 411 - pull rod.

### DETAILED DESCRIPTION OF EMBODIMENTS

The technical solution of an embodiment of the invention is described clearly and completely below with reference to the accompanying drawings.

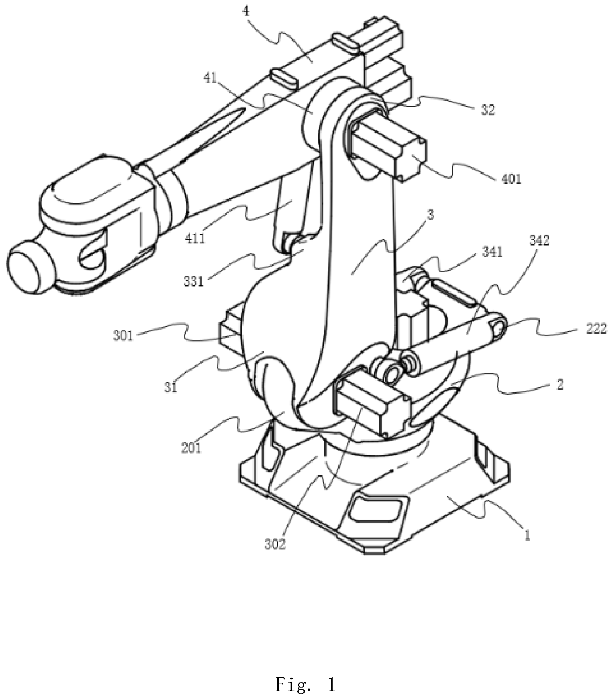

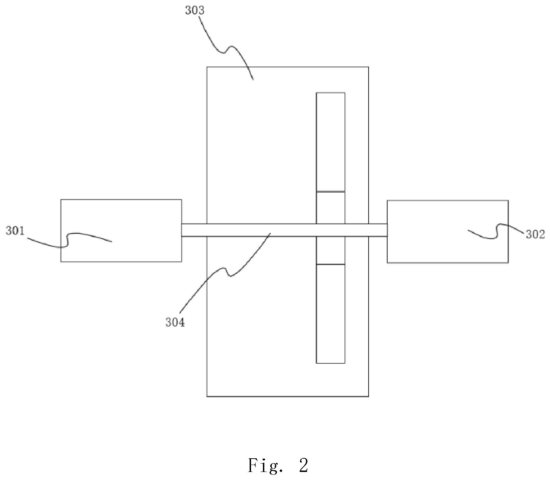

As shown in Figures 1 and 2, an industrial robot comprises a base 1 which is fixed to the ground or to another movable device. A rotatable rotating seat 2 is arranged on the base 1. The rotating seat 2 is symmetrical about an axis. A transmission seat 201 formed on the rotating seat 2 is annular, is positioned on the axis of symmetry of the rotating seat 2, and is located adjacent to an edge of the rotating seat 2.

The transmission seat 201 has a through-hole (not shown), in which a first transmission 303 is arranged. A first drive shaft 304 extends through the first transmission 303 along the direction of the rotational axis of the first arm 3 and is connected to the first transmission 303 so as to drive the first transmission 303. Opposite ends of the first drive shaft 304 are connected to motors 301 and 302, respectively. The motors 301 and 302 drive the first drive shaft 304.

In a possible embodiment in which the drive force required by the first arm 3 is relatively small, only one end of the first drive shaft 304 is connected to a motor.

Forming the transmission seat 201 integrally with the rotating seat 2 increases overall stability. Positioning the transmission seat 201 on the axis of symmetry balances the load on the rotating seat 2, while positioning the transmission seat 201 adjacent to the edge of the rotating seat 2 provides a larger movement space for the first arm 3.

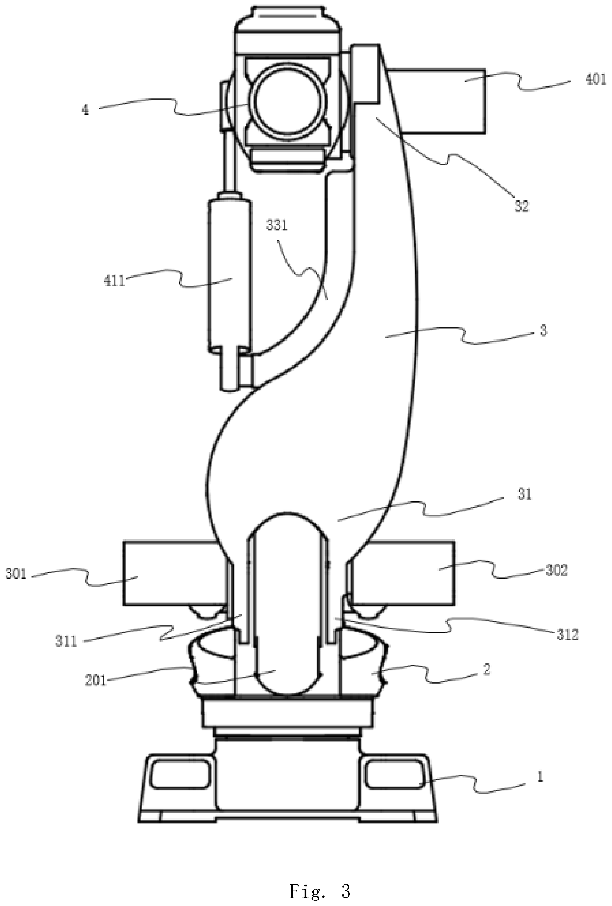

As shown in Figure 3, the first arm 3 is rotatably connected to the first transmission 303 installed in the transmission seat 201. The first arm 3 comprises a first end 31 and a second end 32. The first end 31 is provided with a first connecting portion 311 and a second connecting portion 312, which are arranged on opposite sides of the transmission seat 201 and connected respectively to opposite ends of the first transmission 303. The first transmission 303 drives the first connecting portion 311 and the second connecting portion 312 so as to rotate the first arm 3 as a whole. The motors 301 and 302 are arranged respectively on sides of the first connecting portion 311 and the second connecting portion 312 facing away from the first transmission 303.

The first connecting portion 311 and the second connecting portion 312 are connected respectively to balance levers 341 and 342. Locating pins 221 and 222 are provided on a side of the rotating seat 2 opposite the transmission seat 201. One end of each balance lever 341, 342 is connected respectively to the first connecting portion 311 or the second connecting portion 312, and the other end is connected respectively to the locating pin 221 or 222. The balance levers 341 and 342 exert pulling forces on the first arm 3. The balance levers on opposite sides provide a more balanced pulling force on the first arm 3.

In some possible embodiments, one balance lever may be provided, or the balance levers may be omitted.

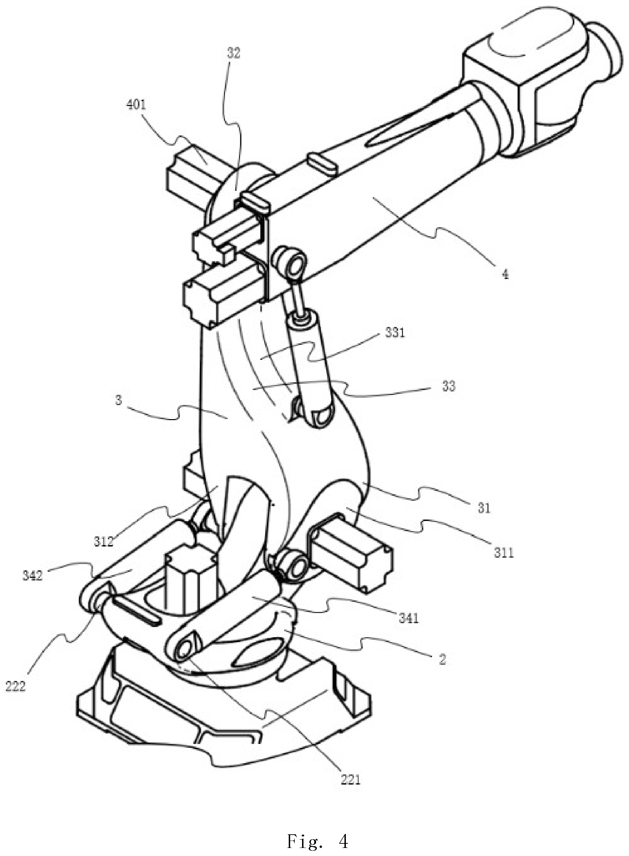

As shown in Figure 4, the first arm 3 has, on the side of the first connecting portion 311, an inclined surface 33 extending between the first end 31 and the second end 32. The inclined surface 33 extends from the first end 31 toward the second end 32 while inclining from the first connecting portion 311 toward the second connecting portion 312, such that the width of the first arm 3 gradually decreases from the first end 31 toward the second end 32. When viewed in the vertical direction, the second end 32 is offset toward the second connecting portion 312. The inclined surface 33 is provided with a projecting reinforcing rib 331 extending from the second end 32 toward the first end 31. The reinforcing rib 331 increases the overall strength of the narrower second end 32.

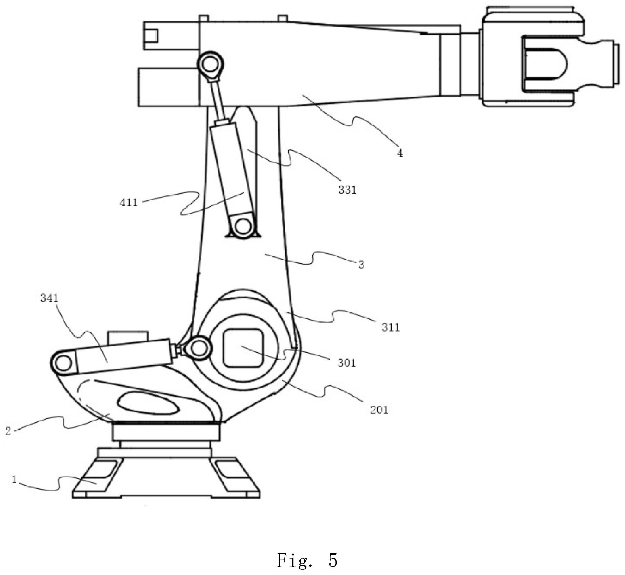

As shown in Figures 4, 5 and 7, the second end 32 of the first arm 3 is connected to a second arm 4. The second arm 4 is connected to the second end 32 by a second transmission 41. A second drive shaft (not shown) extends through the second transmission 41, and one end of the second drive shaft is connected to a motor 401 arranged on one side of the second end 32.

As shown in Figure 3, the second arm 4 is arranged on the side of the first arm 3 having the inclined surface 33. When viewed in the vertical direction, the second arm 4 overlaps the transmission seat 201, so that the loads on opposite sides of the first transmission 303 are more uniform and service life is extended. The inclined surface 33 provides a relatively large space between the lower end of the first arm 3 and the second arm 4, thereby increasing the available rotation space of the second arm 4.

A pull rod 411 is provided between the second arm 4 and the first arm 3. One end of the pull rod 411 is connected to a side of the second arm 4 remote from the second end 32, and the other end is fixedly connected to an end of the reinforcing rib 331 adjacent to the first end 31. The pull rod 411 exerts a pulling force on the second arm 4. Using the end of the reinforcing rib 331 as a connection point for the pull rod 411 simplifies installation, while the reinforcing rib 331 provides sufficient mounting strength.

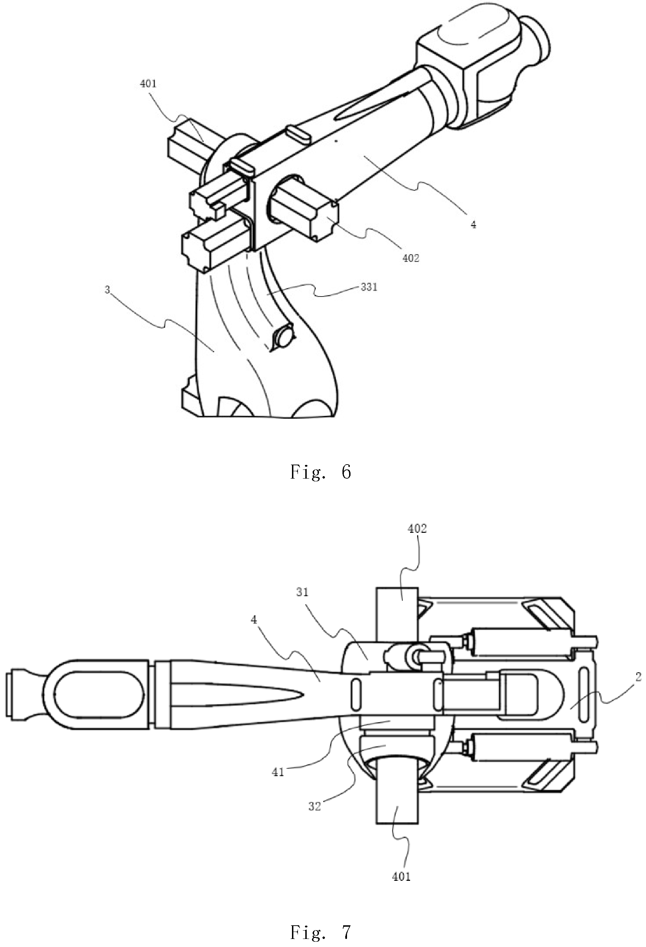

As can be seen in Figure 3, owing to the asymmetric design of the first arm 3, the overall centre of gravity of the first arm 3 is offset toward the second connecting portion 312. In the top view shown in Figure 7, the second arm 4 overlaps the transmission seat 201. The weight of the second arm 4 is thereby transmitted to a region between the first connecting portion 311 and the second connecting portion 312. Because the second arm 4 and the pull rod 411 are arranged on the side of the inclined surface 33, the combined centre of gravity of the first arm 3 and the second arm 4 is not excessively offset toward one side of the transmission seat 201. The load on the transmission seat 201 is therefore more uniform, thereby extending the service life of the robot arm.

Figure 6 shows Embodiment 2. In this embodiment, the other end of the second drive shaft is connected to a motor 402 arranged on one side of the second arm 4. The second arm 4 is thus driven by the motors 401 and 402 to provide a greater torque, and the pull rod 411 between the first arm 3 and the second arm 4 may be omitted.

The industrial robot retains flexibility and degrees of freedom while providing a more robust overall structure, a balanced and stable centre of gravity during use, greater drive power, higher transmission efficiency and higher precision, thereby enabling more precise machining operations.

## Claims

1. An industrial robot comprising, a rotatable rotating seat (2), a transmission seat (201) being provided on the rotating seat (2) and a first transmission (303) being installed in the transmission seat (201); a rotatable first arm (3) comprising a first end (31) and a second end (32), wherein the first end (31) is provided with a first connecting portion (311) and a second connecting portion (312), the first connecting portion (311) and the second connecting portion (312) are arranged on opposite sides of the transmission seat (201) and connected to the first transmission (303), and the first connecting portion (311) and the second connecting portion (312) are configured to move in response to rotation of the first transmission (303); and a first drive shaft (304) extending through and connected to the first transmission (303), wherein at least one end of the first drive shaft (304) is connected to a motor (301, 302), and the motor (301, 302) is arranged on a side of the first connecting portion (311) or the second connecting portion (312) facing away from the first transmission (303).

2. The industrial robot according to claim 1, wherein at least a portion between the first end (31) and the second end (32) is formed as an inclined surface (33), and the inclined surface (33) extends obliquely from the first connecting portion (311) toward the second connecting portion (312).

3. The industrial robot according to claim 1, further comprising a second arm (4) connected to a side of the second end (32) adjacent to the inclined surface (33).

4. The industrial robot according to claim 2, wherein the inclined surface (33) is provided with a reinforcing rib (331) extending from the second end (32) toward the first end (31).

5. The industrial robot according to claim 4, further comprising a second arm (4) connected to the second end (32) by a second transmission (41), wherein a second drive shaft extends through the second transmission (41), one end of the second drive shaft is connected to a motor (401) arranged on one side of the second end (32), and a pull rod (411) is provided between the second arm (4) and the first arm (3), one end of the pull rod (411) being connected to a side of the second arm (4) remote from the second end (32) and the other end of the pull rod (411) being connected to the reinforcing rib (331).

6. The industrial robot according to claim 3, wherein the second arm (4) is connected to the second end (32) by a second transmission (41), a second drive shaft extends through the second transmission (41), one end of the second drive shaft is connected to a motor (401) arranged on one side of the second end (32), and the other end of the second drive shaft is connected to a motor (402) arranged on one side of the second arm (4).

7. The industrial robot according to claim 3, wherein the second arm (4) overlaps the first end (31) of the first arm (3) when viewed in a vertical projection.

8. The industrial robot according to claim 1, wherein at least one balance lever (341, 342) is connected between the first arm (3) and the rotating seat (2), one end of the at least one balance lever (341, 342) is connected to at least one of the first connecting portion (311) and the second connecting portion (312), and the other end of the at least one balance lever (341, 342) is connected to the rotating seat (2).

9. The industrial robot according to claim 1, wherein the transmission seat (201) and the rotating seat (2) are formed integrally at a position on an axis of symmetry of the rotating seat (2) and adjacent to an edge of the rotating seat (2), and the first transmission (303) is arranged in a through-hole in the transmission seat (201).

10. The industrial robot according to claim 8, wherein a side of the rotating seat (2) remote from the transmission seat (201) is provided with a projecting portion for connection to the balance lever (341, 342) of the first arm (3).
